# FASCICULE DE BREVET EUROPEEN

(11) **EP 0 629 712 B1**
(45) Date de publication et mention de la délivrance du brevet: **09.08.2000**
(21) Numéro de dépôt: 94400963.8
(22) Date de dépôt: 04.05.1994
(51) Int. Cl.: C22B 1/06, B01J 38/60, B01J 23/96, C22B 11/00, C22B 59/00

(54) **Procédé de traitement de compositions contenant des métaux précieux et, éventuellement, d'autres éléments de valeur en vue de la récupération de ces espèces**
Verfahren zur Behandlung von Edelmetallien und gegebenenfalls, andere Wertelemente enthaltende Massen, zwecks Wiedergewinnung der genannten Wertstoffe
A process for treating compositions containing noble metals and, optionally, other valuable elements in order to recover said valuables

(30) Priorité: 12.05.1993 FR 9305697
(43) Date de publication de la demande: 21.12.1994
(73) Titulaire: RHODIA CHIMIE, 92408 Courbevoie Cédex (FR)
(72) Inventeur: Cuif, Jean-Pierre, F-75003 Paris (FR)
(74) Mandataire: Dubruc, Philippe

(56) Documents cités:
- EP-A- 0 113 649
- EP-A- 0 155 250
- EP-A- 0 422 970
- EP-A- 0 489 494
- EP-A- 0 528 361
- FR-A- 2 373 610
- FR-A- 2 478 672
- FR-A- 2 672 304
- US-A- 3 985 854
- US-A- 4 670 228

## Description

La présente invention concerne un procédé de traitement pour la récupération des métaux précieux, tels que platine, palladium et rhodium, et éventuellement d'autres éléments de valeur, tels que des terres rares et en particulier le cérium, contenus dans diverses compositions, notamment des catalyseurs usagés ou usés, par exemple des catalyseurs de post-combustion automobile.

On sait que les métaux précieux comme le platine, le rhodium, le palladium ou l'iridium, sont déja largement utilisés, seuls ou conjointement, dans de nombreuses compositions industrielles, en particulier des compositions catalytiques, et ceci éventuellement en association avec d'autres éléments de valeurs tels que des terres rares, comme par exemple le cérium.

A titre d'exemples de telles compositions, on peut plus particulièrement citer les catalyseurs dits multifonctionnels (ou catalyseurs "trois voies"), et notamment les catalyseurs destinés au traitement des gaz d'échappement des moteurs à combustion interne (automobiles ou autres) qui, pour des raisons essentiellement liées à la protection de l'environnement, connaissent ces derniers temps un développement considérable (imposition de normes anti-pollution de plus en plus strictes visant à la réduction des émissions nocives tant des oxydes d'azote, du monoxyde de carbone que des hydrocarbures imbrulés).

Ainsi, à ce jour, près de 80% du rhodium et 40% du platine qui sont consommés à l'échelle mondiale sont en fait utilisés pour la préparation de catalyseurs destinés au domaine de la post-combustion automobile. Compte tenu du coût proportionnellement très élevé engendré par le seul emploi de ces métaux précieux par rapport à l'ensemble du catalyseur fini, leur récupération à partir d'un catalyseur usagé ou usé en vue d'un futur recyclage pour la préparation d'un catalyseur neuf constitue actuellement pour les industriels concernés un enjeu stratégique majeur.

La présente invention s'inscrit justement dans le cadre de cet enjeu.

Des procédés visant à la récupération des métaux précieux contenus dans des catalyseurs usagés ont déja été proposés et décrits dans la littérature. Un tel procédé de lixiviation avec HCl sous empôrtage sulfurique préalable est décrit dans le US-A-3985854.

Parmi ceux se rapprochant le plus de la technique développée et mise au point par la Demanderesse dans le cadre de la présente invention, on peut plus particulièrement mentionner ceux qui, pour l'essentiel, reposent sur une étape de lixiviation acide des catalyseurs usagés contenant les espèces à récupérer, cette étape étant le plus souvent opérée en présence d'un agent oxydant.
Plus précisémment encore, selon ces procédés, les catalyseurs à traiter, qui peuvent alors se présenter soit sous la forme de "pellets" (billes, extrudés ou analogues) constitués généralement d'alumine, en particulier d'alumine active γ, contenant les divers métaux précieux (ainsi qu'éventuellement d'autres éléments de valeur tels que par exemple du cérium), soit sous la forme de monolithes constitués d'une trame (ou support) du type nids d'abeille en céramique réfractaire, et le plus souvent à base de cordiérite (silicoaluminate), sur laquelle est déposé un "wash-coat" (ou couche de revêtement) constitué d'alumine, en particulier d'alumine active γ, et contenant également les métaux précieux (et autres éléments de valeur), sont préalablement broyés pour être amenés dans un état finement divisé, et la poudre ainsi obtenue est ensuite lixiviée, en une ou plusieurs fois, au moyen d'acides minéraux forts tels que l'acide sulfurique, l'acide chlorhydrique ou l'acide nitrique, en présence éventuellement d'un agent oxydant (H₂O₂, Cl₂, HNO₃ ou autre), ce par quoi l'on obtient une ou des solutions de lixiviation contenant sous une forme dissoute les différents métaux précieux recherchés, ces derniers étant ensuite récupérés à partir de ces solutions par toute technique appropriée et connue en soi, en particulier par précipitation sélective.

Toutefois, les procédés tels que décrits ci-dessus ont notamment pour inconvénient de présenter, au niveau des différents métaux précieux recherchés (Pt, Pd, Rh et autres), des rendements de solubilisation, et donc de récupération, qui peuvent paraître comme encore insuffisants, et ceci plus particulièrement en ce qui concerne l'espèce rhodium. Par ailleurs, à côté des métaux précieux, ces procédés ne traitent ou n'envisagent que très rarement le cas de la récupération des autres éléments de valeur éventuellement contenus dans les catalyseurs usagés, comme par exemple les terres rares et en particulier le cérium.

La présente invention a notamment pour but de rémédier aux problèmes ci-dessus en proposant un nouveau procédé industriellement rentable qui, d'une part, permette de récupérer, et ceci avec des rendements élevés, les différents métaux précieux, et en particulier le rhodium, contenus dans diverses compositions, par exemple des catalyseurs usés ou usagés, et qui, d'autre part, convienne également à la récupération d'autres éléments de valeur éventuellement contenus dans lesdites compositions, comme par exemple des terres rares et en particulier le cérium.

A ces fins, il est maintenant proposé selon la présente invention un nouveau procédé de traitement applicable à toute composition contenant des espèces du type métaux précieux et, éventuellement, terres rares telles que cérium, en vue de la récupération desdites espèces, ledit procédé étant caractérisé par le fait qu'il comprend les étapes suivantes :
(i) éventuellement, on amène tout d'abord la composition à traiter dans un état finement divisé de manière à augmenter sa réactivité,
(ii) on mélange ensuite cette composition avec de l'acide sulfurique,
(iii) puis on calcine, entre 150°C et 450°C, le mélange ainsi obtenu,
(iv) et enfin on traite, en milieu aqueux, le produit ainsi calciné avec des ions H⁺ d'une part et avec des ions chlorures d'autre part, et ceci de manière simultanée ou séparée, ce par quoi l'on obtient finalement d'une part un résidu solide substantiellement épuisé en métaux précieux et, éventuellement, en terres rares telles que cérium, et d'autre part une ou plusieurs solutions contenant les espèces précitées.

On notera dès à présent :
- que la combinaison des étapes (ii) et (iii) ci-dessus correspond à une opération qui, par simplicité, sera souvent appelée dans la suite "empâtage sulfurique",
- que l'étape (iv) peut être mise en oeuvre essentiellement selon deux variantes distinctes : (1) soit, et ceci dans le but de récupérer selectivement certaines des espèces recherchées, on procède sur le produit calciné à une double lixiviation en traitant le produit d'abord par une solution acide (apport des ions H⁺) puis, dans un deuxième temps, par une solution contenant les ions chlorures, ce par quoi l'on obtient, respectivement, une première solution contenant par exemple l'essentiel du cérium et une partie du rhodium, et une deuxième solution contenant par exemple l'essentiel du platine et la partie restante de rhodium; (2) soit on procède à une récupération globale des espèces recherchées en lixiviant toutes ces espèces de manière simultanée par traitement du produit calciné au moyen d'une solution unique présentant d'une part l'acidité nécessaire (apport des ions H⁺) et contenant d'autre part les ions chlorures,
- et enfin que dans l'une ou l'autre des variantes ci-dessus, I'opération de traitement par les ions chlorures se fait de préférence en présence d'un agent oxydant.

Le procédé selon l'invention permet ainsi une récupération sélective ou globale, et ceci avec de très hauts rendements, de toutes les espèces du type métaux précieux ou autres éléments de valeur, en particulier du rhodium et du cérium, contenues dans la composition de départ. On peut raisonnablement penser que les rendements exceptionnellement élevés ainsi obtenus sont essentiellement dus à l'étape d'empâtage sulfurique préalable qui facilite la lixiviation ultérieure des espèces recherchées.

Mais d'autres caractéristiques, aspects et avantages de l'invention apparaitront encore plus clairement à la lecture de la description détaillée qui va suivre, ainsi que des divers exemples destinés à l'illustrer de manière concrête mais nullement limitative.

Dans le cadre de la présente invention, l'expression "métaux précieux" doit s'entendre comme désignant et couvrant, pris seuls ou en en combinaison, tous les éléments du groupe du platine, c'est à dire les éléments rhodium, palladium, iridium, platine, ruthénium et osmium. Par ailleurs, l'expression "éléments de valeur" vise ici essentiellement des terres rares, c'est à dire les éléments de la famille des lanthanides dont le numéro atomique est compris inclusivement entre 57 et 71, et plus particulièrement le cérium de numéro atomique 58, ainsi que l'yttrium de numéro atomique 39. Enfin, l'expression "composition" doit être entendue de manière non limitative, c'est à dire qu'elle désigne, et vise ici à couvrir, toutes compositions contenant un ou des métaux précieux, éventuellement en combinaison avec un ou des éléments de valeur, et à partir desquelles la récupération, et ensuite le recyclage, desdites espèces est envisagée.

A titre de compositions traitables au moyen du procédé selon l'invention, on peut plus particulièrement citer les catalyseurs de post-combustion automobile usés ou usagés, ainsi bien entendu que les catalyseurs neufs correspondants lorsque ces derniers constituent par exemple des rebus de fabrication. Compte tenu du fait que le procédé selon l'invention convient particulièrement bien à la récupération conjointe des métaux précieux et du cérium contenus dans de tels catalyseurs, et que ledit procédé trouve ici finalement l'un de ses domaines d'application privilégié, l'exposé qui suit s'articulera essentiellement et volontairement autour de ce cas particulier, mais encore une fois non limitatif.

Les catalyseurs de départ (qui contiennent donc les espèces à récupérer, telles que métaux précieux et cérium) peuvent se présenter sous diverses formes, à savoir par exemple, et comme expliqué dans la partie introductive de la présente demande, sous la forme de "pellets" ou sous la forme de monolithes. On notera que de tels catalyseurs, tant au niveau de leur structure que de leur composition, sont déja largement décrits dans la littérature et ont en particulier fait l'objet de nombreux brevets et/ou demandes de brevets.

Ainsi, ces catalyseurs sont généralement soit essentiellement à base d'alumine (cas des "pellets") soit, dans le cas plus particulier des monolithes, essentiellement à base d'une céramique réfractaire telle qu'un silicoaluminate (cordiérite par exemple) pour la partie support et à base d'alumine pour la partie wash-coat. Toutefois, selon la présente invention, le cas du traitement d'un catalyseur de type monolithe dans lequel la trame (ou support) en nids d'abeille serait faite non pas d'une céramique classique mais d'un métal ou d'un alliage métallique, n'est bien évidemment pas exclu; pour cela, il suffit simplement, par des moyens mécaniques et/ou chimiques appropriés, d'extraire tout d'abord le wash-coat dudit support et de procéder ensuite au traitement selon l'invention sur ce wash-coat de manière à en récupérer les métaux précieux ou le cérium.

Bien entendu, pour les catalyseurs de type usagés ou usés, on notera que ces derniers contiennent généralement diverses impuretés, telles que plomb, matières carbonées et autres. Le procédé de l'invention est toutefois insensible à la présence de ces impuretés.

Le procédé de traitement selon l'invention convient particulièrement bien à la récupération conjointe des métaux précieux et du cérium contenus dans des catalyseurs usagés de type monolithe constitués d'une structure support en cordiérite recouverte d'un wash-coat en alumine.

Selon une première étape facultative du procédé selon l'invention, on procède tout d'abord au broyage du catalyseur de départ. Bien que cette étape ne soit pas véritablement indispensable, elle est néanmoins préférée, en particulier dans le cas d'un catalyseur se présentant sous une forme de type monolithe. Le catalyseur est ainsi amené à un état finement divisé, en particulier sous la forme d'une poudre dont la granulométrie moyenne pourra être comprise entre quelques microns et quelques millimètres par exemple Cette étape permet d'aboutir à un produit d'une part plus homogène chimiquement et d'autre part plus réactif vis à vis des opérations ultérieures mises en jeu dans le cadre du procédé selon l'invention.

Selon une autre caractéristique facultative du procédé selon l'invention, le catalyseur de départ, après éventuellement broyage, peut ensuite être soumis à un pré-traitement thermique (calcination) conduit sous atmosphère réductrice, par exemple un mélange d'argon et d'hydrogène, et ceci à une température généralement comprise entre 300 et 800°C. Le but visé par une telle opération est de rendre encore plus réactifs non seulement les métaux précieux mais aussi le cérium contenus dans le catalyseur usagé, en éliminant la couche éventuelle d'oxyde qui peut enrober lesdits métaux précieux et/ou en réduisant le cérium présent initialement au degré d'oxydation +4 en un cérium de degré d'oxydation +3 qui s'avère plus aisément lixiviable.

Conformément à une première caractéristique essentielle du procédé selon l'invention, la poudre de catalyseur est ensuite mélangée intimement à de l'acide sulfurique. La quantité d'acide sulfurique, exprimée en H₂SO₄ pur, à utiliser dans cette étape correspond à environ de 0,4 à 5 fois la masse de la poudre de catalyseur à traiter, et est de préférence comprise entre 0,5 et 2 fois cette masse, et encore plus préférentiellement entre 0,8 et 1,5 fois cette masse. On notera que l'utilisation de quantités d'acide supérieures à 5 fois environ la masse de catalyseur comme indiqué ci-dessus, bien que théoriquement possible, n'apporte aucun d'avantage particulier ou de résultats significativement améliorés, et s'avère dès lors inutile d'un point de vue pratique.
L'acide sulfurique est le plus souvent mis en oeuvre sous la forme d'une solution, généralement aqueuse, cette dernière étant de préférence relativement concentrée, c'est à dire que sa teneur est à plus de 50% en poids, et encore plus préférentiellement à plus de 80% en poids, en acide sulfurique. On peut également bien entendu faire appel à des acides sulfuriques dilués dans d'autres solvants, ou à de l'acide sulfurique pur. On notera que la pureté et/ou la qualité de l'acide mis en jeu n'a pas véritablement d'importance, et en particulier on peut faire appel à des acides sulfuriques résiduaires ou des acides issus par exemple du grillage de minerais sulfurés, notamment des minerais de Blende, ce qui ajoute de manière considérable à l'intérêt et à l'économie du procédé selon l'invention.

Après avoir mélangé les produits ci-dessus jusqu'à formation et obtention d'une composition plus ou moins solide qui a en fait le plus souvent l'aspect d'une pâte grisâtre, on procède ensuite à la calcination, généralement sous air, du mélange physique résultant.
Cette calcination est conduite à une température comprise entre 150°C et 450°C, en particulier entre 200°C et 400°C, et ceci pendant un temps suffisant (qui dépend en particulier de la quantité de catalyseur empâté) pour obtenir finalement un solide blanchâtre, friable, appelé ici "sulfates cuits".
Au cours de cette étape, dite d'empâtage sulfurique, des réactions chimiques sont initiées et prennent place dans le mélange à base de catalyseur et d'acide sulfurique. En particulier, on observe d'une part le dégagement de fumées blanches acides provenant de la décomposition de l'acide sulfurique, et d'autre part la transformation des espèces chimiques présentes en sulfates.

On notera ici qu'une partie de l'acide sulfurique qui est utilisé pour l'empâtage peut être recyclé dans le procédé en traitant les fumées blanches acides qui se dégagent lors de la formation des sulfates cuits.

Conformément à une autre caractéristique essentielle du procédé selon l'invention, les métaux précieux et le cérium contenus dans la composition issue de l'étape d'empâtage sulfurique, doivent ensuite être lixiviés.

Comme indiqué précédemment dans la description, cette lixiviation peut être alors opérée selon deux variantes.

Selon la première variante, les sulfates cuits sont tout d'abord lixiviés par une solution acide. Cette première lixiviation, qui est de préférence conduite à une température d'au moins 50°C, est ensuite suivie d'une filtration permettant ainsi d'obtenir un premier filtrat d'une part, et un premier résidu solide d'autre part. Ce premier filtrat (solution acide sulfatée) contient alors la majorité du cérium (au moins 70%) et du rhodium (à peu près les deux tiers) qui étaient initialement présents dans le catalyseur, mais est par contre substantiellement exempt de tout platine. Puis, dans une deuxième étape, on procède à une lixiviation dudit premier résidu au moyen cette fois d'une solution contenant des ions chorures d'une part et, de préférence, un agent oxydant d'autre part. Après attaque, la suspension résultante est filtrée et conduit ainsi à un deuxième filtrat et un deuxième résidu solide. Cette deuxième lixiviation, qui est de préférence opérée à ébullition de la solution, permet quant à elle de solubiliser et de récupérer dans le deuxième filtrat (solution acide chlorosulfatée) l'essentiel du platine qui était contenu dans le catalyseur de départ, ainsi que les quantités restantes de cérium d'une part et de rhodium d'autre part non lixiviées au cours de la première opération. Il convient de noter ici que les premier ou deuxième résidus solides mentionnés ci-dessus peuvent être lavés avec de l'eau ou une solution aqueuse acide de manière à récupérer les jus d'imprégnation et éventuellement les petites quantités de platine ou de rhodium encore adsorbées; dans ce cas, les eaux de lavages sont alors mélangées aux premier et deuxième filtrats, respectivement. Enfin, on notera que le deuxième résidu peut en outre être éventuellement recyclé soit à l'étape d'empâtage, soit à la première étape de lixiviation, soit à la deuxième étape de lixiviation.

Selon une deuxième variante du procédé selon l'invention, et qui est ici préférée à la première, les sulfates cuits sont lixiviés au moyen d'une solution acide unique contenant des ions chlorures ainsi que, de préférence, un agent oxydant. Cette lixiviation est de préférence opérée à une température d'au moins 50°C, et encore plus préférentiellement à ébullition de la solution.
Dans ce cas, après lixiviation, on obtient une suspension qui est ensuite filtrée, ce par quoi l'on obtient d'une part un filtrat qui contient alors tous les métaux précieux ainsi que le cérium qui étaient présents dans le catalyseur de départ, et un résidu d'attaque solide.
Cette seconde variante présente pour avantage, par rapport à la première décrite ci-avant, de permettre la mise en solution simultanée, en une seule étape, et avec de très hauts rendements, des métaux précieux et du cérium.
On notera par ailleurs que toutes les considérations développées dans le cadre de la première variante concernant les possibilités de lavages et/ou de recyclages des résidus d'attaque sont applicables par analogie à la deuxième variante.

Concernant l'une ou l'autre des variantes exposées ci-dessus, les remarques générales communes suivantes peuvent maintenant être apportées.

A titre d'exemples d'agents oxydants utilisables seuls ou en mélanges dans le cadre du procédé selon la présente invention, on peut plus particulièrement citer le peroxyde d'hydrogène, l'acide nitrique, le chlore, le persulfate de sodium et l'oxygène. La fonction de cet oxydant est ici d'oxyder le platine, le palladium et le rhodium et de rendre ces espèces plus solubles lors des étapes de lixiviation. Les quantités d'agents oxydants mises en jeu correspondent alors généralement aux quantités stoechiométriques par rapport à l'ensemble du platine, palladium et rhodium oxydables présents dans le milieu.

Les ions chlorures peuvent être, quant à eux, apportés sous la forme d'acide chlorydrique, de chlore gazeux ou de sels, par exemple des chlorures d'alcalins et/ou d'alcalino-terreux tels que chlorure de sodium, chlorure de potassium, chlorure de calcium, chlorure d'ammonium et autres. La fonction de ces ions chlorures dans le cadre du procédé selon l'invention est de permettre une complexation du platine et d'une partie du rhodium. A cet effet, les quantités d'ions chlorures à mettre en oeuvre correspondent au minimum à la stoechiométrie nécessaire relativement aux espèces platine, palladium et rhodium oxydées présentes dans le milieu.

Enfin, I'acidité nécessaire qui est attachée aux solutions de lixiviation à mettre en oeuvre conformément au procédé selon l'invention peut être apportée par de nombreux acides, en particulier les acides minéraux forts tels que l'acide sulfurique, l'acide nitrique ou l'acide chlorhydrique. Les concentrations en acide dans les solutions initiales de lixiviation sont alors fixées de manière telle que le pH des solutions directement obtenues après l'étape (deuxième variante) ou les étapes (première variante) de lixiviation soit encore inférieur ou égal à 2, et de préférence inférieur ou égal à 1. En effet, pour des pH finaux supérieurs à 2, des problèmes liés à l'insolubilité de certaines espèces dans le milieu peuvent alors survenir.

On aura noté qu'un seul et même composé peut donc jouer plusieurs rôles dans le cadre du procédé selon l'invention, à savoir apporter à la fois l'acidité et/ou les ions chlorures et/ou le caractère oxydant qui sont nécessaires à sa mise en oeuvre. Tel est par exemple le cas de l'acide chlorhydrique HCl (acidité H⁺ et ions Cl⁻), de l'acide nitrique (acidité H⁺ et caractère oxydant) ou du chlore (ions Cl⁻ et caractère oxydant).

Il convient également de mentionner ici un cas particulier et intéressant pouvant survenir dans le cadre de la mise en oeuvre de la seconde variante du procédé selon l'invention telle qu'exposée ci-avant (une seule étape de lixiviation), à savoir lorsque la solution unique de lixiviation utilisée à l'étape (iv) est une solution d'acide sulfurique (apport des ions H⁺) contenant des chlorures alcalins, tels que chlorures de sodium, de potassium ou d'ammonium par exemple (apport des ions chlorures). Dans ce cas particulier, et en admettant que la composition initiale traitée contienne du cérium, la présence simultanée dans la solution de traitement d'ions sulfates d'une part et d'ions alcalins d'autre part (Na⁺, K⁺, NH4⁺,...) entraine la formation de sulfates doubles de cérium et d'alcalins qui sont des composés insolubles dans les conditions du traitement. Ces composés ne passent donc pas en solution avec les métaux précieux, et restent donc, après filtration, avec le résidu solide d'attaque. Ceci constitue finalement un moyen particulièrement avantageux et efficace de procéder à une récupération sélective entre les métaux précieux d'une part et le cérium d'autre part tout en restant dans le cadre de la seconde variante du procédé selon l'invention. Le cérium peut être ensuite récupéré du résidu solide par toute technique connue en soi, par exemple par redissolution sélective.

Les métaux précieux, et éventuellement le cérium, contenus dans les solutions issues des étapes de lixiviation décrites ci-avant, peuvent ensuite être récupérés à partir de ces dernières par toute technique appropriée et connue en soi, en particulier par précipitation, cémentation, extraction liquide-liquide ou bien encore par échange d'ions, puis éventuellement enfin être purifiés. Les métaux précieux et/ou le cérium ainsi obtenus peuvent alors être réutilisés pour la fabrication de catalyseurs neufs.

Des exemples illustrant l'invention vont maintenant être donnés.

### Exemple 1

Un catalyseur de post-combustion automobile usagé classique, de type monolithe constitué d'une trame en nids d'abeille en cordiérite revêtue d'un wash-coat en alumine, est concassé puis broyé pour être amené sous la forme d'une poudre fine de granulométrie moyenne de l'ordre de 10 µm (Φ₅₀).

La composition pondérale (en %) de cette poudre est la suivante :
- O = 43.7 %
- Al = 20,3 %
- Si = 17,7 %
- Mg = 6,0 %
- Ce = 2,9 %
- Fe = 1,0 %
- Pt = 1600 ppm
- Rh = 380 ppm
- traces d'autres éléments

Puis 40 g de cette poudre sont mélangés à 112 g d'une solution à 95% en poids d'acide sulfurique. Le mélange ainsi obtenu, qui a alors l'aspect d'une pâte visqueuse grisâtre, est ensuite porté dans un four pour y être calciné pendant 3 heures à 300°C, sous air.
On obtient ainsi 77 g de "sulfates cuits" dont 75 g sont ensuite soumis à une étape de lixiviation opérée pendant 1 heure et à 90°C au moyen de 400 ml d'une solution d'acide sulfurique 6N.
Après filtration de la suspension puis lavage du résidu solide par 100 ml d'eau permutée, on obtient un premier filtrat (intégrant les eaux de lavage) qui présente les caractéristiques suivantes :

| Elément | Teneur (mg/l) | Rendement pondéral de solubilisation (%) |
|---|---|---|
| Pt | 1,2 | 1 |
| Rh | 17 | 69 |
| Ce | 1660 | 88 |

Le résidu solide obtenu précédemment est ensuite lixivié pendant 15 mn et à ébullition au moyen d'une solution qui a été préparée en mélangeant 1280 ml d'une solution d'acide chlorhydrique 6N et 96 ml d'une solution d'eau oxygénée à 30%.

Après filtration de la suspension puis lavage du résidu solide par 100 ml d'eau permutée, on obtient un deuxième filtrat (intégrant les eaux de lavage) qui présente les caractéristiques suivantes :

| Elément | Teneur (mg/l) | Rendement pondéral de solubilisation (en %) |
|---|---|---|
| Pt | 40 | 94 |
| Rh | 3 | 29 |
| Ce | 93 | 12 |

Ainsi, en fin de procédé, les rendements pondéraux totaux de récupération des différentes espèces recherchées contenues dans le catalyseur initial, ont donc été les suivants :
Pt : 95 %
Rh : 98 %
Ce: 100%

### Exemple 2

On procède comme à l'exemple 1 (même catalyseur de départ, mêmes conditions d'empâtage préalable), à cette différence que les "sulfates cuits" résultants sont ici lixiviés en une seule étape au moyen d'une solution unique qui a été obtenue en mélangeant 200 ml d'une solution d'acide sulfurique 6N, 150 ml d'une solution d'acide chlorhydrique 6N et 15 g d'une solution d'eau oxygénée à 30%.

La lixiviation des "sulfates cuits" est conduite pendant 1 heure à ébullition de la solution ci-dessus.
Après filtration de la suspension puis lavage du résidu solide par 150 ml d'une solution d'acide chlorhydrique 6N, on obtient alors un filtrat qui (en intégrant les eaux de lavage) présente les caractéristiques suivantes :

| Elémént | Teneur (mg/l) | Rendement pondéral de solubilisation (%) |
|---|---|---|
| Pt | 125 | 98 |
| Rh | 28 | 93 |
| Ce | 2190 | 95 |

### Exemple 3

On reproduit à l'identique l'exemple 2 ci-dessus, à cette différence près que l'étape unique de lixiviation est mise en oeuvre sans acide sulfurique, la solution unique de lixiviation utilisée ici ayant été obtenue en mélangeant 300 ml d'une solution d'acide chlorhydrique 6N et 30 g d'une solution d'eau oxygénée à 30%.

On obtient alors un filtrat qui (en intégrant les eaux de lavage) présente les caractéristiques suivantes :

| Elément | Teneur (mg/l) | Rendement pondéral de solubilisation (%) |
|---|---|---|
| Pt | 130 | 98 |
| Rh | 28 | 89 |
| Ce | 1340 | 56 |

### Exemple 4 comparatif

Cet exemple à pour but d'illustrer l'importance de la présence d'ions chlorures lors de la lixiviation des "sulfates cuits".

On reproduit ainsi à l'identique l'exemple 2 ci-dessus, à cette différence près que l'étape unique de lixiviation est conduite au moyen d'une solution qui a été obtenue en mélangeant 300 ml d'une solution d'acide sulfurique 6N et 30 g d'une solution d'eau oxygénée à 30% (absence d'ions chlorures).

On obtient alors un filtrat qui (en intégrant les eaux de lavage) présente les caractéristiques suivantes :

| Elément | Teneur (mg/l) | Rendement pondéral de solubilisation (%) |
|---|---|---|
| Pt | 0,03 | 0,03 |
| Rh | 20 | 59 |
| Ce | 2360 | 91 |

Les ions chlorures ont donc une incidence très importante sur la solubilisation du platine, mais aussi partiellement sur la solubilisation du rhodium. Cet effet est par contre quasi-nul pour le cérium.

### Exemple 5 comparatif

Cet exemple rassemble divers essais qui ont été conduits sans mettre en oeuvre d'étape préalable d'empâtage conforme à l'invention, mais de simples lixiviations opérées sur la poudre de catalyseur décrite à l'exemple 1.

Les conditions opératoires de ces essais sont données ci-dessous :
- Essai 1:: 100g de poudre lixiviés pendant 1H30 et à ébullition au moyen de la solution suivante: HNO3 15N (50ml) + HCl 12N (150 ml).
- Essai 2 :: identique à l'essai 1, à cette différence près que la poudre de catalyseur, avant lixiviation, a été préalablement calcinée à 600°C pendant 1 H sous une atmosphère réductrice d'argon à 10% d'H2.
- Essai 3 :: identique à l'essai 1, à cette différence près que la poudre de catalyseur, avant lixiviation, a été préalablement calcinée à 1000°C sous air pendant 1 H.
- Essai 4 :: 50 g de poudre lixiviés pendant 1H30 et à ébullition au moyen de 250 ml d'une solution H2SO4 7N.

Pour chacun de ces essais, les rendements pondéraux de solubilisation (en %) des différentes espèces recherchées sont alors les suivants:

| Essai | | Espèces | |
|---|---|---|---|
| | Pt | Rh | Ce |
| 1 | 81 | 37 | 17 |
| 2 | 96 | 47 | 21 |
| 3 | 85 | 13 | 10 |
| 4 | 0 | 2,4 | 9 |

## Revendications

1. Procédé de traitement d'un catalyseur de post-combustion automobile, usé ou usagé, contenant des métaux précieux constitués, pris seuls ou en mélanges, par le platine, le palladium, le rhodium, l'iridium, le ruthénium ou l'osmium, et, éventuellement, d'autres éléments de valeur représentés par une ou plusieurs terres rares, en vue de la récupération de ces espèces à partir dudit catalyseur, caractérisé par le fait qu'il comprend les étapes suivantes :
(i) éventuellement, on amène tout d'abord le catalyseur à traiter dans un état finement divisé,
(ii) on mélange ensuite ce catalyseur avec de l'acide sulfurique,
(iii) puis on calcine, à une température comprise entre 150 et 450 °C, le mélange ainsi obtenu
(iv) et enfin on traite en milieu aqueux (lixiviation) le produit ainsi calciné soit, de manière simultanée, avec des ions H⁺ d'une part et des ions chlorures, en présence d'un agent oxydant, d'autre part, soit d'abord avec des ions H⁺, puis, après séparation des phases, avec des ions chlorures en présence d'un agent oxydant, ce par quoi l'on obtient finalement d'une part un résidu solide substantiellement épuisé en métaux précieux et, éventuellement, en autres éléments de valeurs, et d'autre part une ou plusieurs solutions contenant les espèces précitées.

2. Procédé la revendication 1, caractérisé en ce que, avant l'étape (ii), le catalyseur, après éventuellement broyage, est soumis à un traitement thermique sous atmosphère réductrice.

3. Procédé selon la revendication 2, caractérisé en ce que ledit traitement thermique est conduit à une température comprise entre 300 et 800 °C.

4. Procédé selon l'une quelconque des revendications précédentes, caractérisé en ce que la masse d'acide sulfurique, exprimée sous forme H₂SO₄, mise en oeuvre à l'étape (ii) est comprise entre 0,4 et 5 fois la masse de catalyseur à traiter.

5. Procédé selon la revendication 4, caractérisé en ce que ladite masse d'acide sulfurique est comprise entre 0,5 et 2 fois la masse de catalyseur à traiter.

6. Procédé selon la revendication 5, caractérisé en ce que ladite masse d'acide sulfurique est comprise entre 0,8 et 1,5 fois la masse de catalyseur à traiter.

7. Procédé selon l'une quelconque des revendications précédentes, caractérisé en ce que l'acide sulfurique mis en oeuvre à l'étape (ii) se présente sous la forme d'une solution aqueuse.

8. Procédé selon la revendication 7, caractérisé en ce que ladite solution aqueuse contient plus de 50 % en poids d'acide sulfurique.

9. Procédé selon la revendication 8, caractérisé en ce que la teneur en acide sulfurique est à plus de 80 % en poids.

10. Procédé selon l'une quelconque des revendications précédentes, caractérisé en ce que l'acide sulfurique mis en oeuvre à l'étape (ii) est un acide résiduaire ou un acide issu du grillage de minerais sulfurés, en particulier de Blende.

11. Procédé selon l'une quelconque des revendications précédentes, caractérisé en ce que le ou les traitements de lixiviation de l'étape (iv) se font à une température d'au moins 50 °C.

12. Procédé selon la revendication 11, caractérisé en ce que ladite température correspond à la température d'ébullition des solutions de lixiviation.

13. Procédé selon l'une quelconque des revendications précédentes, caractérisé en ce que la séparation entre le ou les résidus solides et la ou les solutions qui sont issus de l'étape (iv) se fait par filtration.

14. Procédé selon l'une quelconque des revendications précédentes, caractérisé en ce que le ou les résidus solides issus de l'étape (iv) sont lavés avec de l'eau ou des solutions aqueuses acides.

15. Procédé selon la revendication 14, caractérisé en ce que les eaux de lavage sont ensuite intégrées à la ou aux solutions issues de l'étape (iv).

16. Procédé selon l'une quelconque des revendications précédentes, caractérisé en ce que le ou les résidus solides issus de l'étape (iv) sont recyclés à l'une quelconque des étapes (ii) ou (iv).

17. Procédé selon l'une quelconque des revendications précédentes, caractérisé en ce que ledit agent oxydant est choisi, seul ou en mélange, parmi le péroxyde d'hydrogène, l'acide nitrique, le chlore, le persulfate de sodium et l'oxygène.

18. Procédé selon l'une quelconque des revendications précédentes, caractérisé en ce que les ions chlorures sont apportés sous la forme d'acide chlorhydrique, de chlore gazeux, de chlorures d'alcalins et/ou d'alcalino-terreux, en particulier de chlorure de sodium.

19. Procédé selon l'une quelconque des revendications précédentes, caractérisé en ce que les ions H⁺ sont apportés sous la forme d'acides minéraux forts.

20. Procédé selon la revendication 19, caractérisé en ce que lesdits acides minéraux forts sont choisis, seuls ou en mélanges, parmi l'acide sulfurique, l'acide nitrique et l'acide chlorhydrique.

21. Procédé selon l'une quelconque des revendications précédentes, caractérisé en ce que les concentrations en ions H⁺ sont choisies de manière telle que le pH de la solution issue de l'étape de lixiviation soit inférieur ou égal à 2.

22. Procédé selon la revendication 21, caractérisé en ce que ledit pH est inférieur ou égal à 1.

23. Procédé selon l'une quelconque des revendications précédentes, caractérisé en ce que la terre rare est le cérium.

24. Procédé selon l'une quelconque des revendications 1 à 23, caractérisé en ce que ledit catalyseur se présente sous la forme de "pellets" à base d'alumine.

25. Procédé selon l'une quelconque des revendications 1 à 23, caractérisé en ce que ledit catalyseur se présente sous la forme d'un monolithe constitué d'une structure support de type nids d'abeille en céramique réfractaire revétue d'un wash-coat à base d'alumine.

26. Procédé selon la revendication 25, caractérisé en ce que ladite céramique réfractaire est un silicoaluminate, en particulier de la cordiérite.

27. Procédé selon l'une quelconque des revendications précédentes, caractérisé en ce que ledit catalyseur contient à la fois du platine, du rhodium et du cérium.

28. Procédé selon l'une quelconque des revendications précédentes, caractérisé en ce que lesdites espèces contenues dans la ou les solutions issues de l'étape (iv) sont ensuite récupérées par précipitation, par cémentation, par extraction liquide-liquide ou par échange d'ions.

## Claims

1. A process for treating a used or exhausted automobile post-combustion catalyst containing precious metals constituted by platinum, palladium, rhodium, iridium, ruthenium or osmium, used alone or as a mixture, and optionally other valuable elements represented by one or more rare earths, to recover these species from said catalyst, characterized in that it comprises the following steps:
(i) optionally, firstly bringing the catalyst to be treated into a finely divided form;
(ii) then mixing this catalyst with sulphuric acid;
(iii) then calcining the mixture obtained at a temperature in the range 150°C to 450°C;
(iv) and finally treating the calcined product in an aqueous medium (leaching), either simultaneously with H⁺ ions and with chloride ions and in the presence of an oxidising agent, or firstly with H⁺ ions then, after separating the phases, with chloride ions in the presence of an oxidising agent, in order to finally obtain firstly a solid residue which is substantially free of precious metals and optionally other valuable elements, and secondly one or more solutions containing the said species.

2. A process according to claim 1, characterized in that prior to step (ii) the catalyst, after optional grinding, undergoes a heat treatment in a reducing atmosphere.

3. A process according to claim 2, characterized in that said heat treatment is carried out at a temperature in the range 300°C to 800°C.

4. A process according to any one of the preceding claims, characterized in that the mass of sulphuric acid used in step (ii), expressed in the H₂SO₄ form, is in the range 0.4 to 5 times the mass of the catalyst to be treated.

5. A process according to claim 4, characterized in that said mass of sulphuric acid is in the range 0.5 to 2 times the mass of the catalyst to be treated.

6. A process according to claim 5, characterized in that said mass of sulphuric acid is in the range 0.8 to 1.5 times the mass of the catalyst to be treated.

7. A process according to any one of the preceding claims, characterized in that the sulphuric acid employed in step (ii) is in the form of an aqueous solution.

8. A process according to claim 7, characterized in that said aqueous solution contains more than 50% by weight of sulphuric acid.

9. A process according to claim 8, characterized in that the amount of sulphuric acid is more than 80% by weight.

10. A process according to any one of the preceding claims, characterized in that the sulphuric acid employed in step (ii) is a residual acid or an acid from roasting sulphur-containing minerals, in particular blende.

11. A process according to any one of the preceding claims, characterized in that the leaching treatment or treatments of step (iv) are carried out at a temperature of at least 50°C.

12. A process according to claim 11, characterized in that said temperature corresponds to the boiling point of the leaching solutions.

13. A process according to any one of the preceding claims, characterized in that the solid residue or residues and the solution or solutions produced from step (iv) are separated by filtering.

14. A process according to any one of the preceding claims, characterized in that the solid residue or residues from step (iv) are washed with water or with aqueous acid solutions.

15. A process according to claim 14, characterized in that the wash water is then integrated into the solution(s) from step (iv).

16. A process according to any one of the preceding claims, characterized in that the solid residue or residues produced from step (iv) is/are recycled to step (ii) or step (iv).

17. A process according to any one of the preceding claims, characterized in that said oxidising agent is selected from hydrogen peroxide, nitric acid, chlorine, sodium persulphate and oxygen, used alone or as a mixture.

18. A process according to any one of the preceding claims, characterized in that the chloride ions are provided in the form of hydrochloric acid, chlorine gas or alkali and/or alkaline-earth chlorides, in particular sodium chloride.

19. A process according to any one of the preceding claims, characterized in that the H⁺ ions are provided in the form of strong mineral acids.

20. A process according to claim 19, characterized in that said strong mineral acids are selected from sulphuric acid, nitric acid and hydrochloric acid, used alone or as a mixture.

21. A process according to any one of the preceding claims, characterized in that the concentrations of H⁺ ions are selected such that the pH of the solution produced from the leaching step is 2 or less.

22. A process according to claim 21, characterized in that said pH is 1 or less.

23. A process according to any one of the preceding claims, characterized in that the rare earth is cerium.

24. A process according to any one of claims 1 to 23, characterized in that said catalyst is in the form of alumina-based pellets.

25. A process according to any one of claims 1 to 23, characterized in that said catalyst is in the form of a monolith constituted by a honeycomb-type support structure of refractory ceramic coated with an alumina-based wash coat.

26. A process according to claim 25, characterized in that said refractory ceramic is a silicoaluminate, in particular cordierite.

27. A process according to any one of the preceding claims, characterized in that said catalyst simultaneously contains platinum, rhodium and cerium.

28. A process according to any one of the preceding claims, characterized in that said species contained in the solution or solutions produced from step (iv) are then recovered by precipitation, cementing, liquid-liquid extraction or by ion exchange.

## Patentansprüche

1. Verfahren zur Behandlung eines gebrauchten oder verbrauchten Kraftfahrzeugnachverbrennungskatalysators, der Edelmetalle, allein oder in Form einer Mischung gebildet aus Platin, Palladium, Rhodium, Iridium, Ruthenium oder Osmium, und gegebenenfalls andere Elemente von Wert, gebildet aus einer oder mehreren seltenen Erden, enthält, hinsichtlich der Wiedergewinnung dieser Spezies ausgehend von dem Katalysator, dadurch gekennzeichnet, daß es die folgenden Schritte umfaßt:
(i) man überführt gegebenenfalls zuallererst den zu behandelnden Katalysator in einen fein verteilten Zustand,
(ii) dann mischt man diesen Katalysator mit Schwefelsäure,
(iii) dann kalziniert man die so erhaltene Mischung bei einer Temperatur zwischen 150 und 450°C,
(iv) und schließlich behandelt man das so kalzinierte Produkt in wäßrigem Medium (Auslaugung) entweder gleichzeitig mit H⁺-Ionen einerseits und Chloridionen in Gegenwart eines Oxidationsmittels andererseits oder zuerst mit H⁺-Ionen, dann nach Trennung der Phasen mit Chloridionen in Gegenwart eines Oxidationsmittels, wodurch man schließlich einerseits einen festen, im wesentlichen an Edelmetallen und gegebenenfalls an anderen Elementen von Wert erschöpften Rückstand und andererseits eine oder mehrere Lösungen, die die erwähnten Spezies enthalten, erhält.

2. Verfahren nach Anspruch 1, dadurch gekennzeichnet, daß der Katalysator vor Schritt (ii) nach einer gegebenenfalls erfolgenden Zerkleinerung einer thermischen Behandlung unter reduzierender Atmosphäre unterworfen wird.

3. Verfahren nach Anspruch 2, dadurch gekennzeichnet, daß die thermische Behandlung bei einer Temperatur zwischen 300 und 800°C ausgeführt wird.

4. Verfahren nach einem der vorangegangenen Ansprüche, dadurch gekennzeichnet, daß die Masse von Schwefelsäure, ausgedrückt in Form von H₂SO₄, die in Schritt (ii) eingesetzt wird, das 0,4- bis 5-fache der Masse von zu behandelndem Katalysator beträgt.

5. Verfahren nach Anspruch 4, dadurch gekennzeichnet, daß die Masse von Schwefelsäure das 0,5- bis 2-fache der Masse von zu behandelndem Katalysator beträgt.

6. Verfahren nach Anspruch 5, dadurch gekennzeichnet, daß die Masse von Schwefelsäure das 0,8- bis 1,5-fache der Masse von zu behandelndem Katalysator beträgt.

7. Verfahren nach einem der vorangegangenen Ansprüche, dadurch gekennzeichnet, daß die in Schritt (ii) eingesetzte Schwefelsäure in Form einer wäßrigen Lösung vorliegt.

8. Verfahren nach Anspruch 7, dadurch gekennzeichnet, daß die wäßrige Lösung mehr als 50 Gew.-% Schwefelsäure enthält.

9. Verfahren nach Anspruch 8, dadurch gekennzeichnet, daß der Gehalt an Schwefelsäure höchstens 80 Gew.-% beträgt.

10. Verfahren nach einem der vorangegangenen Ansprüche, dadurch gekennzeichnet, daß die in Schritt (ii) eingesetzte Schwefelsäure eine Abfallsäure oder eine Säure, die aus dem Rösten schwefelhaltiger Erze, insbesondere von Blende, stammt, ist.

11. Verfahren nach einem der vorangegangenen Ansprüche, dadurch gekennzeichnet, daß die Auslaugungsbehandlung(en) von Schritt (iv) bei einer Temperatur von mindestens 50°C erfolgen.

12. Verfahren nach Anspruch 11, dadurch gekennzeichnet, daß die Temperatur der Siedetemperatur der Auslaugungslösungen entspricht.

13. Verfahren nach einem der vorangegangenen Ansprüche, dadurch gekennzeichnet, daß die Trennung zwischen dem oder den festen Rückständen und der oder den Lösungen, die aus dem Schritt (iv) stammen, durch Filtration erfolgt.

14. Verfahren nach einem der vorangegangenen Ansprüche, dadurch gekennzeichnet, daß der oder die aus Schritt (iv) stammenden festen Rückstände mit Wasser oder wäßrigen sauren Lösungen gewaschen werden.

15. Verfahren nach Anspruch 14, dadurch gekennzeichnet, daß die Waschwässer dann mit der oder den Lösungen, die aus Schritt (iv) stammen, vereinigt werden.

16. Verfahren nach einem der vorangegangenen Ansprüche, dadurch gekennzeichnet, daß der oder die aus Schritt (iv) stammenden festen Rückstände in einen beliebigen der Schritte (ii) oder (iv) zurückgeführt werden.

17. Verfahren nach einem der vorangegangenen Ansprüche, dadurch gekennzeichnet, daß das Oxidationsmittel aus Wasserstoffperoxid, Salpetersäure, Chlor, Natriumpersulfat und Sauerstoff allein oder in Form einer Mischung ausgewählt wird.

18. Verfahren nach einem der vorangegangenen Ansprüche, dadurch gekennzeichnet, daß die Chloridionen in Form von Salzsäure, gasförmigem Chlor, Alkalimetall- und/oder Erdalkalimetallchloriden, insbesondere von Natriumchlorid, eingebracht werden.

19. Verfahren nach einem der vorangegangenen Ansprüche, dadurch gekennzeichnet, daß die H⁺-Ionen in Form von starken Mineralsäuren eingebracht werden.

20. Verfahren nach Anspruch 19, dadurch gekennzeichnet, daß die starken Mineralsäuren unter Schwefelsäure, Salpetersäure und Salzsäure allein oder in Form einer Mischung ausgewählt werden.

21. Verfahren nach einem der vorangegangenen Ansprüche, dadurch gekennzeichnet, daß die Konzentrationen an H⁺-Ionen so ausgewählt werden, daß der pH der aus dem Auslaugungsschritt stammenden Lösung unter oder gleich 2 ist.

22. Verfahren nach Anspruch 21, dadurch gekennzeichnet, daß der pH unter oder gleich 1 ist.

23. Verfahren nach einem der vorangegangenen Ansprüche, dadurch gekennzeichnet, daß die seltene Erde Cer ist.

24. Verfahren nach einem der Ansprüche 1 bis 23, dadurch gekennzeichnet, daß der Katalysator in Form von 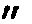 Pellets" auf Grundlage von Aluminiumoxid vorliegt.

25. Verfahren nach einem der Ansprüche 1 bis 23, dadurch gekennzeichnet, daß der Katalysator in Form eines Monoliths, gebildet aus einer wabenförmigen tragenden Struktur aus feuerfester Keramik, überzogen mit einem Wash-Coat auf Grundlage von Aluminiumoxid, vorliegt.

26. Verfahren nach Anspruch 25, dadurch gekennzeichnet, daß die feuerfeste Keramik ein Aluminiumsilicat, insbesondere Cordierit, ist.

27. Verfahren nach einem der vorangegangenen Ansprüche, dadurch gekennzeichnet, daß der Katalysator zugleich Platin, Rhodium und Cer enthält.

28. Verfahren nach einem der vorangegangenen Ansprüche, dadurch gekennzeichnet, daß die genannten Spezies, die in der oder den aus Schritt (iv) stammenden Lösungen enthalten sind, dann durch Präzipitation, durch Zementation, durch Flüssig-Flüssig-Extraktion oder durch Ionenaustausch wiedergewonnen werden.
